# EUROPEAN PATENT SPECIFICATION

(11) **EP 4 080 156 B1**
(45) Date of publication and mention of the grant of the patent: **06.08.2025**
(21) Application number: 22168628.0
(22) Date of filing: 15.04.2022
(51) Int. Cl.: G01B 5/00, G01D 3/028, G01D 5/347

(54) **OPTICAL OR MAGNETIC SCALE WITH SELECTABLE ZERO THERMAL EXPANSION POINT**
OPTISCHER ODER MAGNETISCHER MASSSTAB MIT WÄHLBAREM NULLPUNKT DER THERMISCHEN AUSDEHNUNG
ÉCHELLE OPTIQUE OU MAGNÉTIQUE AVEC POINT DE DILATATION THERMIQUE ZÉRO SÉLECTIONNABLE

(30) Priority: 22.04.2021 IT 202100010292
(43) Date of publication of application: 26.10.2022
(73) Proprietor: Givi Misure S.r.l., 20834 Nova Milanese (MB) (IT)
(72) Inventor: FALCONE, Claudio, 20834 Nova Milanese (MB) (IT); GRASSI, Massimo, 20834 Nova Milanese (MB) (IT); GUERRA, Pierluigi, 20834 Nova Milanese (MB) (IT); VIGENTINI, Marco, 20834 Nova Milanese (MB) (IT)
(74) Representative: Faggioni, Marco

(56) References cited:
- EP-A1- 0 264 801
- EP-A1- 3 657 134
- EP-A2- 0 566 828

## Description

### FIELD OF THE INVENTION

The present invention relates to an optical or magnetic scale with selectable position of the zero thermal expansion point, also named Fixed Expansion Point, or simply FEP.

### STATE OF THE PRIOR ART

As known to the man skilled in the art, optical or magnetic scales are frequently used on tool machines and operating machines (hereinafter generically referred to as "machines", for the sake of brevity) for measuring with great accuracy the linear movements of carriages and tables.

Other indirect measuring systems, such as for example rotary encoders, associated with the rotation of ball screws, appear to be less accurate due to errors caused by the motion transmission screw which can locally heat, expand, and wear, because of its frequent movements. Conversely, a measuring system which directly detects, in a closed loop, the position of a carriage or a table in a machine is not affected by plays, inversion errors, thermal variations, and inaccuracies of the kinematic transmission system. This means that an optical or magnetic scale accuracy is not affected by external factors and maintains its great accuracy over time.

In optical scales, a micro-engraved scale-grating is provided on a steel or glass support, which support is scanned by a position transducer converting into an electric signal the alternation of the reflecting/diffusing or transparent/opaque markings encountered while moving along the same scale-grating. In magnetic scales too, the magnetic band support bearing a succession of north/south poles, detected by the position transducer, is made of steel. Hereinafter, for the sake of brevity, reference will be exclusively made to optical scales provided with a scale-grating support made of steel, although it should be clearly intended that the present invention is equally addressed to both types of scales, i.e., optical scales provided with a scale-grating support made of steel or glass, and magnetic scales provided with a magnetic band support made of steel.

In view of the field of application and of the severe conditions of use of the optical scales, the scale-grating needs to be protected from impacts and dirt by being housed in a stout aluminium case, hereinafter referred to as scale-holder, which also serves as a guide and a support for the scale-grating and as a means for fixing the optical scale to the machine. Although magnetic scales are much less sensitive to dirt than optical scales, they also are usually housed and protected inside a scale-holder.

As known, safe for very few exceptions, all materials expand as a function of their coefficient of linear thermal expansion λ and their temperature. The value of the linear thermal expansion of a material is expressed by: ΔL = λ x 10⁻⁶ °C⁻¹. Materials traditionally used for manufacturing optical scales usually are aluminium for the scale-holder and steel or glass for the scale-grating support. The values of the coefficient of expansion of such materials are significantly different from each other: 23,0 for aluminium, 10.6 for steel and 8,0 for glass, respectively. Conventionally, length measurements refer to a temperature of 20°C in metrology; length measurements are, in fact, taken under said condition and certificates are issued highlighting the errors by which the measuring system is affected. For example, take a bar which is 1000,000 mm long at 20°C, heat this bar to a temperature of 25°C and stabilize the same at said temperature; the length of the bar will increase by 115 µm if made of aluminium, 53 µm if made of steel, or 40 µm if made of glass. Such differences - especially those between the aluminium of the scale-holder and the steel or glass of the scale-grating support of the optical scale - cannot certainly be neglected in metrology nor in the mechanical processing of workpieces and the final measurement of processed workpieces.

When a machine on which a measuring system is installed can operate in air-conditioned environments at a temperature close to 20°C, no adverse effects occur since the thermal differences and their consequent linear thermal expansions are irrelevant and negligible. Conversely, when a machine operate at temperatures which can differ by even 8/10°C and more from the reference temperature of 20°C, in either positive or negative range (day/night, summer/winter), as almost always happens, it is obvious that there is an absolute need to adopt technical solutions which may compensate for the thermal expansion differences of the various components of the measuring system and of the machine, or which may at least significantly reduce the adverse effects caused by said thermal expansion differences.

Tool machines and numerically controlled machining centres (CNC) of modern concept employ temperature sensors and a software for correcting the measurement errors, which are periodically reset. However, such systems are expensive, need a certain time for reset operations, and cannot be applied to every type of machine. A valid solution, even for the most advanced machines, is therefore that of employing optical scales having a scale-grating support made of steel, especially when the scale-grating is considerably long (over 2-3 m). Optical scales, in fact, are usually fixed to the carriages, tables, or machine structures. Such machines are made of steel and cast iron and have therefore a linear thermal expansion coefficient like that of steel (λ = 10.6). In this case, the linear thermal expansion of the machine axes and that of the measuring system follow each other and tend to zero.

On the other hand, it must be considered that the scale-holder is made of aluminium and has therefore a thermal expansion coefficient (λ = 23) significantly different from that of steel, as mentioned above. Thus, to avoid any measuring system distortion leading to misalignments, the scale-holder must be allowed to stretch and to shrink as a function of the room temperature, freely spreading its thermal expansion, which is very different from that of the machine parts to which the scale-holder is usually applied. Furthermore, the scale-holder must be perfectly integral with the machine at least in one point, because it is not acceptable that over time the scale-holder could "migrate" dragging the scale-grating and making it take different positions from the measuring system initial zero setting.

Current embodiments of optical scales provide for a scale-holder to be fixed to the machine at various rigid fastening points, either directly or by means of an intermediate support bar, which is likewise usually made of aluminium. However, solutions providing for a scale-holder to be fixed to the machine at a single rigid fastening point are more appropriate - said single fastening point usually being positioned at a central position and forming the constant position reference between the scale-holder and the machine - while all the other fastening points are sufficiently elastic to leave the scale-holder free to longitudinally spread its own thermal expansion in the opposite directions from that single fastening point, which is referred to as zero thermal expansion point or FEP, as mentioned above.

Optical scales currently available on the market, do not provide for the FEPs of the scale-holder and of the scale-grating to be specifically positioned where the machine FEP is positioned. Machine FEP is not always positioned at a central position, because the machine FEP position obviously depends, as we will see below, from the type of machine and the machining process being carried out. When installing known measuring systems, therefore, it is usually not duly considered a very important aspect, i.e., the directions where the thermal expansion of scale-holder, scale-grating, workpiece, and machine spread. The resulting adverse effect is that linear thermal expansions are uncontrollably and often inconsistently spread, this obviously being counterproductive for an accurate machining of the workpieces.

The technical problem addressed by the present invention is therefore that of providing a measuring system, specifically an optical scale, wherein the scale-grating can be fixed to the scale-holder and the scale-holder can be fixed to the machine in such a way that both the scale-grating and the scale-holder can freely expand - consequently to temperature variations - in a mutually independent way and yet according to mutually consistent directions, and wherein the operator can easily adapt the optical scale to the specific type of machine on which the optical scale is installed, and to the specific machining process being carried out.

A partial answer to this technical problem was first disclosed by US-5375338 (1994) which provides for mutually fixing the scale-holder and the scale-grating support at a first fixed point (the scale-grating FEP), while fixing the scale-holder to the machine bed at a second fixed point (the scale-holder FEP). This patent provides then for fixing the other points of the scale-grating support and the scale-holder by fixing means having some degree of elasticity, to accommodate the deformations of said elements caused by their thermal expansion because of a temperature change.

Specifically, in addition to the FEP fixed points mentioned above, the scale-grating support is made elastically integral with the scale-holder by means of a layer of an elastic adhesive, while the scale-holder is fixed to the machine bed at various discrete points by means of screw clamps having a partial shape elasticity.

However, the solution disclosed in US-5375338 exhibit acceptable performances only for small size, one-piece optical scales - as were, in fact, most of the optical scales used at the filing time of the above patent - but said performances tend to become unsatisfactory both with one-piece optical scales of greater length and in the case of modular optical scales - which last are nowadays particularly requested and used due to their great versatility and ease of transport and assembly - wherein the optical scale is formed by several modules associated with each other only during final assembly, and the scale-grating support is formed by a flexible metal strip. Both the elastic adhesive and the fixing screw clamps with shape elasticity disclosed in the prior art patent, in fact, can accommodate only minimal deformations without causing significant drawbacks. As a matter of fact, when the variations in length due to thermal expansion of the scale-grating support or of the scale-holder go beyond the elastic deformation capacity of the elastic adhesive or of the fixing screw clamps with shape elasticity, drawbacks such as detachment or breakage of the layer of elastic adhesive or deformation of the scale-holder take place.

In any case, i.e., even before these drawbacks take place, both the elastic adhesive and the fixing screw clamps with shape elasticity impart an elastic reaction force on the scale-grating support and the scale-holder, which force is directly proportional to the extent of the thermal expansion. Therefore, the above said elements do not freely expand, but undergo progressive compression due to the elastic reaction force of their fixing devices, which compression obviously is greater the longer the optical scale. Furthermore, said elastic reaction force varies with temperatures and time - due to phenomena of aging of the adhesive and hysteresis or fatigue of the fixing screw clamps with shape elasticity - and thus it is not possible to exactly evaluate the final deformation of the scale-grating and the scale-holder at a given temperature; this ultimately resulting in random measuring errors that lower the quality of high-precision machining operations.

Object of the present invention is therefore to provide, in addition to the FEP points of the scale-grating and scale-holder, a plurality of other fastening means positioned in several points between the scale-holder and the machine and between the scale-grating and the scale-holder. Said fastening means should be apt to ensure the correct cross position of these elements, stably and accurately, while allowing at the same time their free longitudinal slipping under thermal expansion. The linear thermal expansion of the scale-grating and the scale-holder could so occur independently from each other and without any negative interference from said fastening means.

A further object of the present invention is then to provide a special way for selecting the different possible FEP points of the scale-grating support wherein - contrarily to what provided in the above cited prior art - neither a preventive drilling operation of said scale-grating support nor a preventive alignment operation of the same with respect to the scale-holder is requested for the activation of the selected FEP point.

### SUMMARY OF THE INVENTION

The technical problem is solved, and these objects are achieved by means of an optical scale having the features defined in claim 1. Other preferred features of such optical scale are defined in the dependent claims.

### BRIEF DESCRIPTION OF THE DRAWINGS

Further features and advantages of the optical scale according to the present invention will anyhow become more evident from the following detailed description of a preferred embodiment of the same, given by mere way of non-limiting example and illustrated in the accompanying drawings, wherein:
Fig. 1 is a schematic perspective view of the table of a vertical milling machine, on the front side of which an optical scale is fixed;
Fig. 2A and Fig. 2B are schematic side views of a press wherein the optical scale is mounted along the vertical axis Y on the movable ram and on the swan-neck shaped side plate, respectively;
Fig. 3 is a perspective view of a length of the optical scale according to the present invention;
Fig. 4 is a front view of the length of optical scale of Fig. 3;
Fig. 5 is a cross-sectional view of the optical scale of Fig. 3, taken along the V-V line of Fig. 4;
Fig. 6 is a schematic perspective view of the guide and support system of the magnetic band support made of steel;
Fig. 7 is a schematic perspective view of the guide and support system of the scale-grating support made of glass;
Fig. 8 is a schematic side view of a double chuck CNC machine.

### DETAILED DESCRIPTION OF THE PREFERRED EMBODIMENT

The optical scale of the present invention offers, as already per se known from the above cited prior art document, an easy selection of the FEP positions, according to the machine on which it is installed, allowing to optimize the accuracy of the processes carried out at temperatures different from the reference temperature of 20°C.

There are countless types of machines, each of them having a specific behaviour to be taken into due consideration to identify where the FEPs of the machine single axes, which often differ from each other, are positioned and where it is therefore more appropriate to provide for the positioning of the optical scale FEPs, both of the scale-grating and of the scale-holder, also in consideration of the specific processes being carried out.

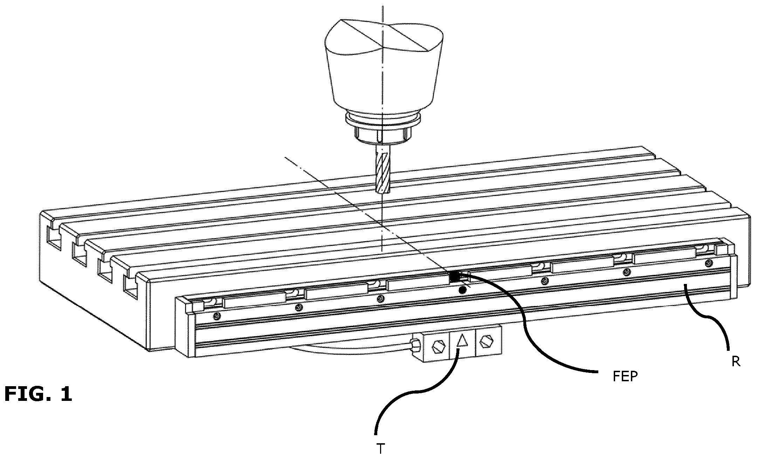

By way of example, as can be seen in the schematic view of Fig. 1, in a vertical milling machine the FEP is positioned at the centre of the longitudinal axis, as well as at the centre of the transverse axis, and it is therefore correct that the optical scale FEP is also in its central position. On the contrary, the FEPs of the vertical axis and of the descent axis of the milling machine quill are positioned laterally. For a better machining accuracy, it would be therefore preferable that the optical scale too had its FEP in a lateral position, i.e., a position consistent with that of the FEP of the machine.

The same applies to the longitudinal and transverse axis of a parallel lathe. A workpiece is in fact clamped by the chuck jaws, and the longitudinal guides and the workpiece have a thermal expansion from said chuck towards the tailstock. The FEP of the longitudinal axis of the parallel lathe is therefore "under the head", i.e., in correspondence with the chuck which clamps the workpiece. The FEP of an optical scale measuring the displacement of the carriage moving along guides which are subject to thermal expansion likewise the workpiece, should be in correspondence of the chuck, i.e., positioned laterally, left side/right-side, depending on whether the optical scale is mounted on the front/rear of the machine bed. Thus, a traditional optical scale with a centrally positioned FEP would not thermally expand consistently with the thermal expansion of the machine and workpiece. On the other hand, the FEP of the transverse axis of the parallel lathe is centrally positioned, i.e., coincident with the chuck and workpiece rotational centre, and therefore an optical scale with a centrally positioned FEP is in this case appropriate to measure the position of the machining tool along such axis.

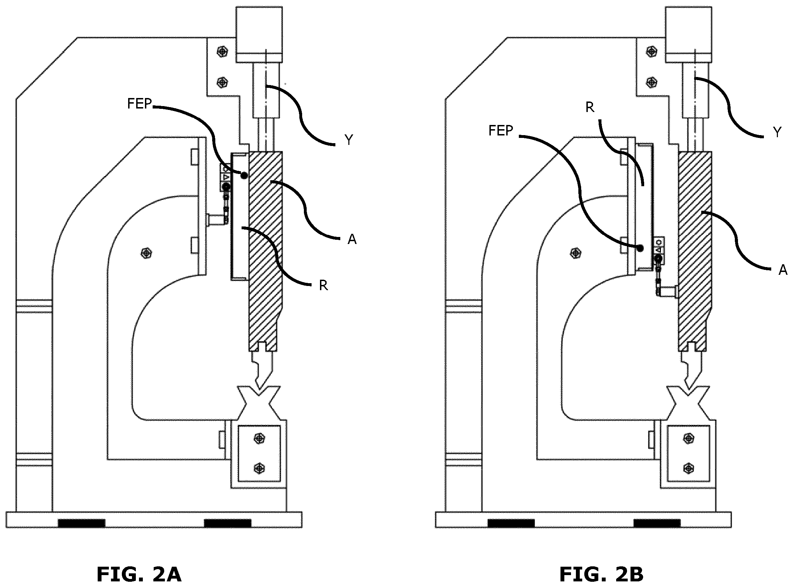

Figs. 2A, 2B show a synchronized hydraulic press brake, wherein the ram A descent is driven by two hydraulic cylinders, and it is controlled by two optical scales R installed along the two press uprights Y (which are superimposed in the side view of Figs. 2A, 2B). The position information sent to the CNC by the two optical scales R are used to lower the ram A parallel to the table below, until it reaches the maximum descent point which causes, with good accuracy, the bending angle to be obtained in the workpiece.

In this manufacturing process, it is advisable that the FEP of the optical scale is precisely positioned at such bending point, so that the accuracy of the bending angle remains constant regardless of the temperature variations. The linear thermal expansions of the optical scale, in fact, are spread in a direction opposite to that of the ram A descent and do not shift therefore its final descent point, thus not affecting the bend angle. The optical scales R are usually fixed to the plane of the ram A, as schematically shown in Fig. 2A, but they are also commonly fixed instead to the swan-neck shaped plate as shown in Fig. 2B. Regardless of the different mountings, the FEP of the optical scale R should be positioned towards a side end of the same, as shown in the drawings.

From such considerations the optical scale of the present invention was developed, where the position of the FEPs of the scale-holder P and of the scale-grating support can be easily set after being selected from one of the positions provided to this purpose along the entire optical scale, and where the scale-grating support and the scale-holder are furthermore fastened, to the scale-holder and to the machine respectively, at one or more free longitudinal slipping positions. "Free longitudinal slipping", as used herein, means a type of constraint causing a reaction force sufficient to keep the fastened element in a crosswise stable and correct position, said reaction force being however constant as the thermal expansion of the fastened element changes, i.e., independent from said thermal expansion.

According to such innovative solution, in the optical scale according to the present invention, not only the position of the FEPs can be easily set according to the machine model on which it is applied and to the manufacturing process being carried out, said FEPs position being furthermore easily changeable at will but, most important, the scale-grating support and the scale-holder can spread their thermal expansion without any restriction from said FEPs, as the machine temperature conditions change, thus allowing to have precise measurements, independently from any length variations induced by thermal expansion, and to avoid, meanwhile, any possible deformation or distortion of the scale-grating support and of the scale-holder.

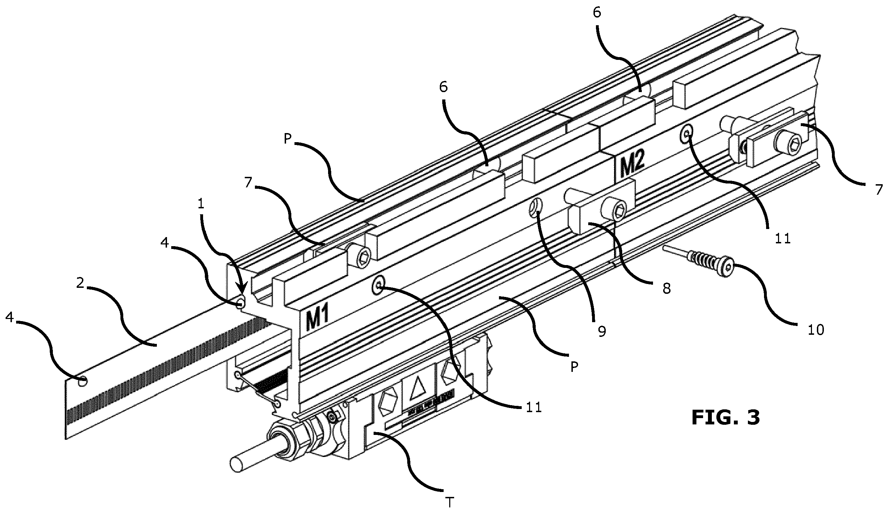

A detailed description of a preferred embodiment of the optical scale according to the present invention is given in the following with reference to Figs. 3 to 7.

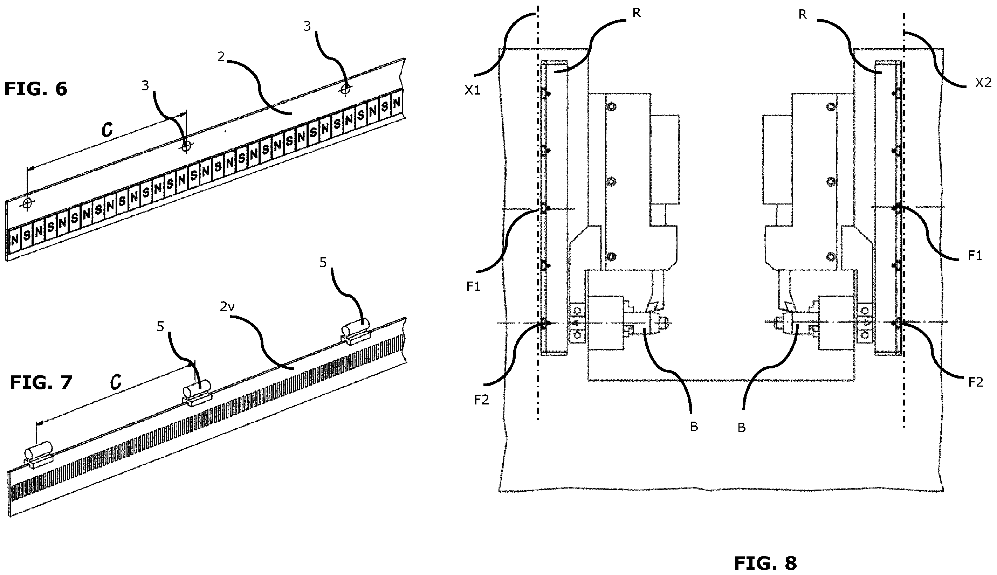

The scale-grating support is a steel strip 2 which can also be considerably long (in which case it is coiled up for transport) . The upper edge of the steel strip 2 is inserted into an internal groove 1 of the scale-holder P having a circular cross-section and longitudinally extending along the entire scale-holder P; groove 1 is open towards the inside of the scale-holder to allow the insertion therein of the upper edge of the steel strip 2. The steel strip 2 is held in position inside the groove 1 by balls 4 pressed with interference in corresponding gauged holes 3 (Fig. 6) provided at constant pitch C along the entire length of the steel strip 2. This particularly simple and effective insertion system of the steel strip 2, is thoroughly described in the European Patent Application No. 21195800.4 filed by the same applicant, to which reference can be made for more complete information.

In the case of magnetic scales, a similar steel strip 2 is used, onto which magnetic bands with a succession of north/south poles are applied (Fig. 6), while in the case of optical scales having a scale-grating support 2v made of glass (Fig. 7) cylindrical cursors 5 with circular cross-section are glued on the upper edge of the support, arranged according to the same constant pitch C as the gauged holes 3 and suitable for being inserted into the groove 1 with play.

The aluminium scale-holder P consists of one or more modules M, each being transportable in length, to be assembled on site in a known way. Fig. 3 shows a length of an optical scale consisting of a first complete module M1 and part of a second module M2. Through-slots 6 are provided on the upper part of and crosswise the scale-holder P, and arranged at equal intervals, for example according to the same pitch C of the gauged holes 3 of the steel strip 2, along the entire length of the scale-holder P. Through-slots 6 allow to fasten the scale-holder P to the machine by means of elastic-thrust screw clamping fasteners 7 engaging each through-slot 6 except the one where the FEP of the scale-holder P must be positioned. Screw clamping fasteners 7 impart a transversal elastic-thrust, provided by spring contrast means, which is sufficient to ensure that the scale-holder P continuously rests on the machine table and that any movement in the two crosswise directions be prevented, thus ensuring the maintenance over time of the alignment tolerances between the various modules M of the optical scale. On the other hand, the tightening of the elastic-thrust clamping fasteners 7 is adjusted so that the resulting elastic-thrust is such as to allow the scale-holder P to freely slip in the longitudinal direction so spreading its linear thermal expansion when the ambient temperature changes - which thermal expansion significantly differ from that of the machine, due to their different materials - without causing distortions or misalignments of the scale-holder P itself. On the contrary, a rigid screw clamping fastener 8 is fitted into the slot 6 intended to determine the FEP position of the scale-holder P, which rigid clamping fastener precisely mates with said slot 6 and thus rigidly fixes the scale-holder P to the machine table, determining the point where the scale-holder P is fixedly joined to the machine, under any condition of temperature. Depending on the various possible situations, as already illustrated above, the rigid screw clamping fastener 8 can be positioned in correspondence with a central slot 6 or a side slot 6 or in any other position in between, usually corresponding to the FEP of the machine on which the optical scale is installed (even though particular situations, as those mentioned above, may require a different positioning). Consequently, the thermal expansions of the scale-holder P and of the machine can freely spread, without any mutual interference, in the directions imposed by their geometry.

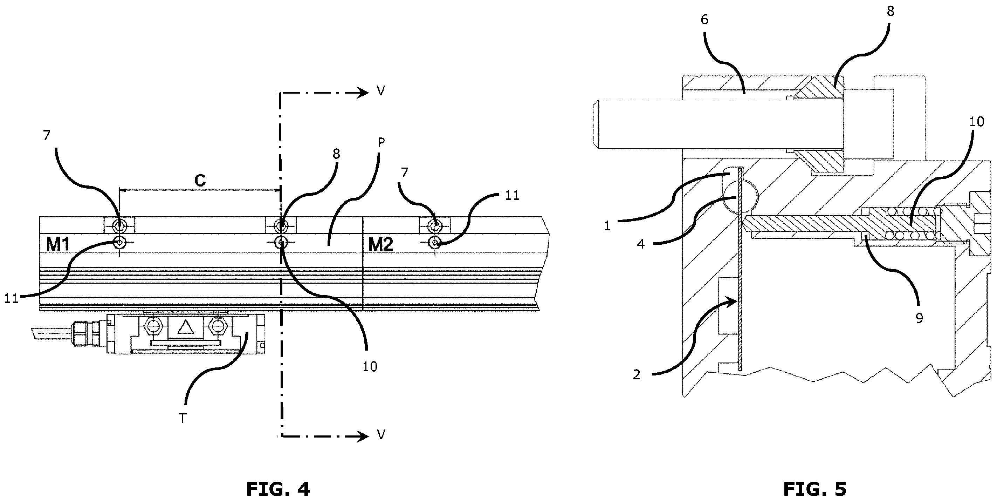

Furthermore, threaded through-holes 9 are provided crosswise the scale-holder P, ending within the inside of the scale-holder P as can be clearly seen in the cross-sectional view of Fig. 5, in correspondence of the steel strip 2 forming the scale-grating support. The through-holes 9 are arranged throughout the scale-holder P according to a constant pitch C which can be the same pitch of the slots 6. A pressure pin 10 is screwed in a selected one of said through-holes 9 until said steel strip 2 is intercepted by the tip of the pressure pin 10 and locked in position against a scale-holder wall lying behind, which position thus becomes the scale-grating FEP. In the case of the glass support 2v, the pitch of the through-holes 9 is equal to the pitch C between the cylindrical cursors 5 glued to the scale grating glass support, so that the tip of the pressure pin 10 impinges onto the steel body of the cursors 5, and not onto the glass support 2v, and the position of the pressure pin 10 thus becomes the FEP of the scale-grating on the glass-support 2v.

The steel strip 2 or the glass support 2v are in fact rigidly locked in that position while they remain completely free to slip along the scale-holder P in the allowed longitudinal direction to spread the thermal expansion, i.e., towards the opposite end when the FEP is in a lateral position, towards the right/left when instead the FEP is in a central position or at any of the other intermediate positions determined by the through-holes 9. All other unused through-holes 9 are protected by respective watertight caps 11 to prevent liquids or dirt from getting inside the scale-holder P.

Such way of fixing the scale-grating FEP is particularly effective and advantageous with respect to that of the known art illustrated above. This FEP fixing mode, in fact, does not require any preventive drilling of the scale-grating support for housing a fixing screw. Furthermore, this FEP fixing mode can be quickly activated under any circumstance, also when the scale-grating support and the scale-holder are under thermal expansion, while in the device of the prior art, under these same conditions, the through holes on the scale-grating support and the scale-holder which house the fixing screw might be no more aligned at the selected FEP position.

An optical scale is usually supplied with centrally positioned FEPs of both the scale-holder P and the scale-grating. However, it is always possible and easy to modify their position, if necessary. As a matter of fact, it is sufficient to move the rigid screw clamping fastener 8 into a different slot 6, to move the pressure pin 10 by placing it in a through-hole 9 corresponding to the new position of the rigid clamping fastener 8, and to move the relative cap 11 in the former position of the pressure pin 10, to make the FEP of scale-holder P coincide with the FEP of the scale-grating, in a new desired position. Furthermore, any other arrangement of the FEPs is possible, when considered useful for the purpose of improving the machining accuracy of the machine. The optical scale of the present invention, in fact, provides for the maximum flexibility in setting the position of the FEPs of both the scale-holder P and the scale-grating, which can thus be at the same or at different positions. The whole operation can be carried out in a few minutes and without requiring any special equipment.

### TEST EXAMPLE

Various processing tests were carried out to verify the reliability and validity of the new optical scale with FEP selectable position. Here we report the case of a double chuck CNC machine, as schematically illustrated in Fig. 8, the axes X1 and X2 of which were controlled, in a first series of tests, by optical scales traditionally manufactured, i.e., optical scales having a centrally positioned FEP F1.

A difference in the turning diameter of the workpieces of up to 12 µm along both axes X1 and X2 of the machine was caused by temperature variations of about 6/8°C within a 1-month period. 8 µm of said 12 µm were clearly due to the linear thermal expansion of the measuring system since the workpieces B were turned at different diameter values as the temperature changed. In fact, both optical scales R had a thermal expansion starting from their central position, i.e., FEP positioned in F1, towards their ends, so making the tool to move up/down with consequent undesired variations in the turning diameter.

In a second series of tests, both optical scales R were replaced by a pair of optical scales having a lateral FEP F2, coincident with the rotational axis of the chucks: the accuracy of machining of the workpieces B was no more affected by temperature variations, thus being much more stable and precise.

The optical scale of the present invention has been described with reference to a preferred fastening system of the scale-grating or magnetic band support inside the scale-holder P. However, all the essential features of the invention can also be applied to optical scales having different fastening systems of said support, provided that such fastening systems include a single fixed point of the support, wherein the support is made integral with the scale-holder by means, for example, of a screw or other mechanical fastening system or inelastic adhesive, while the remaining part of the support is held in position inside the scale-holder P by use of free longitudinal slipping means.

It is anyhow understood that the invention is not to be considered as limited to the arrangements illustrated above, that are just exemplary embodiments of the same, but that different variants are possible, all within the reach of a skilled man in the art, without thereby departing from the scope of protection of the invention, which is solely defined by the following claims.

### REFERENCES

A = ram
B = workpieces
C = constant pitch
F1, F2 = FEP positions
M1, M2 = optical scale-holder modules
P = scale-holder
R = optical scale
T = transducer
X1, X2 = machine axes
Y = press upright
1 = groove
2 = steel strip
2v = glass support
3 = gauged holes
4 = balls
5 = cursors
6 = slots
7 = elastic-thrust clamping fastener
8 = rigid clamping fastener
9 = through-holes
10 = pressure pin
11 = caps

## Claims

1. An optical or magnetic scale for taking linear measurements, comprising a scale-holder (P) integral with a fixed or moving part of a machine, and a scale-grating support (2, 2v) housed inside said scale-holder (P) and scanned by a transducer (T), wherein the transducer (T) slides along the scale-holder (P) and is integral with said moving or fixed part of said machine, the scale-holder (P) and the scale-grating support (2, 2v) being respectively fixed to the machine and to the scale-holder (P) at a single fixed position forming their respective FEP, and said FEP being independently selectable among several predefined positions (6, 9), **characterized in that** said scale-holder (P) and said scale grating support (2, 2v) are furthermore fastened, to the machine and to the scale-holder (P) respectively, at one or more additional free longitudinal slipping positions.

2. An optical or magnetic scale as in claim 1, wherein said one or more free longitudinal slipping positions of the scale-holder (P) in relation to the machine consist of mechanical couplings with elastic-thrust contrast means having a constant transversal load which does not change under longitudinal slipping of the scale-holder (P) due to thermal expansion.

3. The optical or magnetic scale according to claim 1, wherein said one or more free longitudinal slipping positions of the scale-grating support (2, 2v) in relation to the scale-holder (P) consist of mechanical couplings having a degree of freedom in the longitudinal direction of the scale-grating support.

4. The optical or magnetic scale according to claim 2, wherein said mechanical couplings with elastic-thrust contrast means having a constant transversal load comprise through-slots (6) provided crosswise the scale-holder (P) and elastic-thrust screw clamping fasteners (7) housed in said through-slots and screwed to the machine.

5. The optical or magnetic scale according to claim 3, wherein said mechanical coupling having a degree of freedom in the longitudinal direction of the scale-grating support comprises a plurality of spherical or cylindrical elements (4, 5) fixed to an edge of said scale-grating support (2, 2v) and housed in an open cross-section groove (1) longitudinally formed in said scale-holder (P), said open cross-section at least partially matching the cross-section of the spherical or cylindrical elements (4, 5), and said mechanical coupling having a sufficient play to allow said degree of freedom in the longitudinal direction of the scale-grating support.

6. The optical or magnetic scale according to claim 5, wherein said single fixed position of the scale-grating is formed at a selected one of a plurality of threaded through-holes (9) provided crosswise the scale-holder (P) and ending inside the same, and wherein a pressure pin (10) is screwed into said selected through-hole until it intercepts and locks in position said scale grating support (2, 2v) against a wall of the scale-holder (P).

7. An optical or magnetic scale according to any one of the preceding claims, wherein said scale-holder (P) is made of aluminium and said scale-grating support (2, 2v) is made of steel or glass.

## Patentansprüche

1. Optische oder magnetische Skala zur Durchführung linearer Messungen, die einen Skalenhalter (P), der mit einem festen oder beweglichen Teil einer Maschine fest verbunden ist, und einen Skalengitterträger (2, 2v) umfasst, der innerhalb des Skalenhalters (P) untergebracht ist und von einem Messfühler (T) abgetastet wird, wobei der Messfühler (T) entlang des Skalenhalters (P) gleitet und mit dem beweglichen oder festen Teil der Maschine fest verbunden ist, wobei der Skalenhalter (P) und der Skalengitterträger (2, 2v) an der Maschine bzw. an dem Skalenhalter (P) an einer einzigen festen Position befestigt sind, die ihren jeweiligen FEP bildet, und der FEP unabhängig unter mehreren vordefinierten Positionen (6, 9) wählbar ist, **dadurch gekennzeichnet, dass** der Skalenhalter (P) und der Skalengitterträger (2, 2v) außerdem an der Maschine bzw. an dem Skalenhalter (P) an einer oder mehreren zusätzlichen freien Längsgleitpositionen befestigt sind.

2. Optische oder magnetische Skala nach Anspruch 1, wobei die eine oder die mehreren freien Längsgleitpositionen des Skalenhalters (P) relativ zu der Maschine aus mechanischen Kupplungen mit elastisch-kraftschlüssigen Kontrastmitteln bestehen, die eine konstante Querlast aufweisen, die sich beim Längsgleiten des Skalenhalters (P) nicht aufgrund von Wärmeausdehnung ändert.

3. Optische oder magnetische Skala nach Anspruch 1, wobei die eine oder mehreren freien Längsverschiebepositionen des Skalengitterträgers (2, 2v) relativ zu dem Skalenhalter (P) aus mechanischen Kupplungen mit einem Freiheitsgrad in Längsrichtung des Skalenhalters bestehen.

4. Optische oder magnetische Skala nach Anspruch 2, wobei die mechanischen Kupplungen mit elastisch-kraftschlüssigen Kontrastmitteln, die eine konstante Querbelastung aufweisen, Durchgangsschlitze (6), die quer zum Skalenhalter (P) vorgesehen sind, und elastisch-kraftschlüssige Klemmbefestigungen (7) umfassen, die in den Durchgangsschlitzen untergebracht und mit der Maschine verschraubt sind.

5. Optische oder magnetische Skala nach Anspruch 3, dadurch wobei die mechanische Kupplung mit einem Freiheitsgrad in Längsrichtung des Skalengitterträgers eine Vielzahl von kugelförmigen oder zylindrischen Elementen (4, 5) umfasst, die an einem Rand des Skalengitterträger (2, 2v) befestigt sind und in einer Nut mit offenem Querschnitt (1) untergebracht sind, die in Längsrichtung in dem Skalenhalter (P) ausgebildet ist, wobei der offene Querschnitt zumindest teilweise mit dem Querschnitt der kugelförmigen oder zylindrischen Elemente (4, 5) übereinstimmt und die mechanische Kupplung ein ausreichendes Spiel aufweist, um den Freiheitsgrad in Längsrichtung des Skalengitterträgers zu ermöglichen.

6. Optische oder magnetische Skala nach Anspruch 5, wobei die einzige feste Position des Skalengitters an einem ausgewählten einer Vielzahl von Gewindedurchgangslöchern (9) gebildet ist, die quer zum Skalenhalter (P) vorgesehen sind und innerhalb desselben enden, und wobei ein Druckbolzen (10) in das ausgewählte Durchgangsloch geschraubt ist, bis er den Skalengitterträger (2, 2v) abfängt und in seiner Position gegen eine Wand des Skalenhalters (P) arretiert.

7. Optische oder magnetische Skala nach einem der vorhergehenden Ansprüche, wobei der Skalenhalter (P) aus Aluminium und der Skalengitterträger (2, 2v) aus Stahl oder Glas gebildet ist.

## Revendications

1. Échelle optique ou magnétique pour prendre des mesures linéaires, comprenant un porte-échelle (P) solidaire d'une partie fixe ou mobile d'une machine, et un support de grille d'échelle (2, 2v) logé à l'intérieur dudit porte-échelle (P) et balayé par un transducteur (T), dans laquelle le transducteur (T) coulisse le long du porte-échelle (P) et est solidaire de ladite partie mobile ou fixe de ladite machine, le porte-échelle (P) et le support de grille d'échelle (2, 2v) étant respectivement fixés à la machine et au porte-échelle (P) à une seule position fixe formant leur FEP respectif, et ledit FEP pouvant être sélectionné indépendamment parmi plusieurs positions prédéfinies (6, 9), **caractérisée en ce que** ledit porte-échelle (P) et ledit support de grille d'échelle (2, 2v) sont en outre fixés respectivement à la machine et au porte-échelle (P), à une ou plusieurs positions de glissement longitudinal libre supplémentaires.

2. Échelle optique ou magnétique selon la revendication 1, dans laquelle lesdites une ou plusieurs positions de glissement longitudinal libre du porte-échelle (P) par rapport à la machine consistent en des accouplements mécaniques avec des moyens de contraste de poussée élastique présentant une charge transversale constante qui ne change pas pendant le glissement longitudinal du porte-échelle (P) en raison de la dilatation thermique.

3. Échelle optique ou magnétique selon la revendication 1, dans laquelle lesdites une ou plusieurs positions de glissement longitudinal libre du support de grille d'échelle (2, 2v) par rapport au porte-échelle (P) consistent en des accouplements mécaniques présentant un degré de liberté dans la direction longitudinale du support de grille d'échelle.

4. Échelle optique ou magnétique selon la revendication 2, dans laquelle lesdits accouplements mécaniques avec des moyens de contraste de poussée élastique présentant une charge transversale constante comprennent des fentes traversantes (6) prévues transversalement au porte-échelle (P) et des fixations de serrage à vis de poussée élastique (7) logées dans lesdites fentes traversantes et vissées à la machine.

5. Échelle optique ou magnétique selon la revendication 3, dans laquelle ledit accouplement mécanique présentant un degré de liberté dans la direction longitudinale du support de grille d'échelle comprend une pluralité d'éléments sphériques ou cylindriques (4, 5) fixés à un bord dudit support de grille d'échelle (2, 2v) et logés dans une rainure de section transversale ouverte (1) formée longitudinalement dans ledit porte-échelle (P), ladite section transversale ouverte correspondant au moins partiellement à la section transversale des éléments sphériques ou cylindriques (4, 5), et ledit accouplement mécanique présentant un jeu suffisant pour permettre ledit degré de liberté dans la direction longitudinale du support de grille d'échelle.

6. Échelle optique ou magnétique selon la revendication 5, dans laquelle ladite position fixe unique de la grille d'échelle est formée au niveau d'un sélectionné parmi une pluralité de trous traversants filetés (9) prévus transversalement au porte-échelle (P) et se terminant à l'intérieur de celui-ci, et dans laquelle une goupille de pression (10) est vissée dans ledit trou traversant sélectionné jusqu'à ce qu'elle intercepte et verrouille en position ledit support de grille d'échelle (2, 2v) contre une paroi du porte-échelle (P).

7. Échelle optique ou magnétique selon l'une des revendications précédentes, dans laquelle ledit porte-échelle (P) est en aluminium et ledit support de grille d'échelle (2, 2v) est en acier ou en verre.
